# EUROPÄISCHE PATENTSCHRIFT

(11) **EP 2 337 965 B1**
(45) Veröffentlichungstag und Bekanntmachung des Hinweises auf die Patenterteilung: **26.12.2012**
(21) Anmeldenummer: 09782674.7
(22) Anmeldetag: 07.09.2009
(51) Int. Cl.: F16D 55/224, F16D 65/095

(54) **SCHEIBENBREMSE FÜR EIN SCHIENENFAHRZEUG MIT EINEM ELEKTRISCH ISOLIERTEN BREMSBELAGHALTER**
DISK BRAKE FOR A RAILWAY VEHICLE HAVING AN ELECTRICALLY INSULATED BRAKE LINING RETAINER
FREIN A DISQUE POUR UN VEHICULE SUR RAILS PRESENTANT UN SUPPORT DE GARNITURE DE FREIN ISOLE ELECTRIQUEMENT

(30) Priorität: 22.10.2008 AT 16532008
(43) Veröffentlichungstag der Anmeldung: 29.06.2011
(73) Patentinhaber: Siemens AG Österreich, 1210 Wien (AT)
(72) Erfinder: STOCKER, Werner, A-8053 Graz (AT)
(74) Vertreter: Maier, Daniel Oliver
(86) Internationale Anmeldenummer: PCT/EP2009/061530
(87) Internationale Veröffentlichungsnummer: WO 2010/046174

(56) Entgegenhaltungen:
- DE-A1- 19 844 507
- US-A- 5 579 873

## Beschreibung

### Technisches Gebiet

Die vorliegende Erfindung betrifft eine Scheibenbremse für ein Schienenfahrzeug, mit einer Bremsscheibe, und eine die Bremsscheibe umgreifende Bremszange, welche im Betätigungsfall mittels eines Bremshebels einen auf einem Bremsbelaghalter angeordneten Bremsbelag gegen die Bremsscheibe drückt, wobei der Bremshebel und der Bremsbelaghalter mittels einer Gelenksverbindung verbunden sind.

### Stand der Technik

Bei elektrisch angetriebenen Schienenfahrzeugen beobachtet man ein Phänomen, das unter der Bezeichnung "vagabundierende Ströme" bekannt ist, das sind elektrische Erdungs- oder Masseströme, die auf kaum vorhersehbaren Ausbreitungswegen zwischen elektrischen Baueinheiten, oder aber auch zwischen Teilen des Wagenkastens selbst, zum Fließen kommen. Oftmals können diese "vagabundierenden Ströme" auch mit einem aufwändigen Erdungskonzept nur schwer beherrscht werden.

Eine mögliche Ursache für diese "vagabundierenden Ströme" könnten elektrische Rückströme sein, die bei einem fahrenden Zug im Falle der Betätigung der Scheibenbremse von der Schiene auf das Rad und von dort, über die Bremszange und das Drehgestell, in den Wagenkasten eingespeist werden.

Auch an einem stillstehenden Schienenfahrzeug wurden im Moment, als auf einem benachbarten Gleis ein anderer Zug vorbei fuhr, "vagabundierende Ströme" beobachtet.

"Vagabundierende Ströme" können an Bord eines Schienenfahrzeugs befindliche elektronische Geräte stören, indem sie diese zu Fehlermeldungen veranlassen oder gar eine Fehlfunktion hervorrufen. Die Sicherheit eines Schienenfahrzeugs kann dadurch beeinträchtigt werden.

Besonders störend ist dieses Phänomen insbesondere bei Hochgeschwindigkeitszügen. Zum einen besteht deren Wagenkasten aus Leichtmetall und ist besonders gut elektrisch leitend. Zum anderen sind die Bremsbeläge bei einem Hochgeschwindigkeitszug meist aus einem metallischen Sinterwerkstoff hergestellt, der ebenfalls ein guter elektrischer Leiter ist.

Um die Ausbreitung von "vagabundierenden Strömen" zu unterbinden, ist man bestrebt, möglichst alle bei einem Schienenfahrzeug in Frage kommende Einspeisungspunkte und Störquellen von vornherein auszuschalten.

Um die Einspeisung eines elektrischen Rückstroms von der Schiene in das Drehgestell zu unterbinden ist man dazu übergegangen, die Befestigung der Bremszange am Drehgestell elektrisch zu isolieren. Die Bremszange hat aber eine große Masse, so dass die Isolation bei Fahrt hohen mechanischen Belastungen ausgesetzt ist. Dies macht die Ausführung der elektrischen Isolation aufwändig.

Man hat auch versucht, den Strompfad einer möglichen Einspeisung durch Isolation des Bremsbelags zu unterbinden. Hierfür hat man den Bremsbelag am Bremsbelaghalter mittels einer elektrisch isolierenden Klebeverbindung befestigt. Da aber der Klebstoff während eines Bremsvorgangs einer hohen Temperaturbelastung standhalten muss, ist die Klebeverbindung aufwändig.

Aus der US 5 579 873 A ist bereits eine Scheibenbremse für ein Schienenfahrzeug bekannt, gemäß dem Oberbegriff des Anspruchs 1, welches eine von einer Bremszange umrissene Bremsscheibe aufweist, wobei die Bremszange im Betätigungsfall mittels eines Bremshebels einen auf einem Bremsbelaghalter angeordneten Bremsbelag gegen die Bremsscheibe drückt. Der Bremshebel und der Bremsbelaghalter sind mittels einer Gelenksverbindung verbunden.

### Darstellung der Erfindung

Der vorliegenden Erfindung liegt die Aufgabe zu Grunde, eine Scheibenbremse für Schienenfahrzeuge anzugeben, bei der eine Einspeisung eines elektrischen Rückstroms von der Schiene in den Wagenkasten auf möglichst einfache Weise verhindert ist.

Die Lösung dieser Aufgabe erfolgt durch eine Scheibenbremse mit den Merkmalen des Patentanspruchs 1. Vorteilhafte Ausgestaltungen der Erfindung sind in den abhängigen Ansprüchen definiert.

Die erfindungsgemäße Scheibenbremse ist dadurch gekennzeichnet, dass zwischen dem Bremshebel und dem Bremsbelaghalter eine elektrische Isolation ausgebildet ist. Dies hat den Vorteil, dass das Gewicht des zu isolierenden Bauteils vergleichsweise gering ist. Unabhängig davon, ob es sich bei der Scheibenbremse um eine Ausführung als Kompakt-Bremszange, oder als Hängelaschen-Bremszange handelt, ist die Bremszange, die eine Masse etwa 150 bis 200 kg hat, verglichen mit dem Bremsbelaghalter, dessen Masse etwa 5 kg beträgt, ein Leichtgewicht. Da das zu isolierenden Bauteil eine vergleichsweise geringere Masse aufweist, kann die elektrische Isolation kostengünstiger hergestellt werden. Zugute kommt auch, dass die elektrische Isolation von den Reibflächen des Bremsbelags soweit entfernt ist, dass sie bei einem Bremsvorgang einer geringeren Hitzeeinwirkung ausgesetzt ist. Dadurch wird der Isolationswerkstoff mit einer geringeren Temperatur beansprucht. Dadurch kann die Isolationswirkung mit einem geringeren Aufwand erreicht werden. Ein weiterer Vorteil der Erfindung ist darin zu sehen, dass auch dann, wenn der Bremsbelag vollständig verschlissen ist und der Bremsbelaghalter metallischen Kontakt mit der Scheibenbremse hat, die Isolationswirkung erhalten bleibt. Entsprechendes gilt für den Fall des Verlustes des Bremsbelags.

Eine bevorzugte Ausführung der Erfindung kann so konstruiert sein, dass die Gelenkverbindung ein oder mehrere Isolationsteile aufweist, welche den Bremshebel und den Bremsbelaghalter voneinander isolieren. Für eine isolierende Ausführung einer Gelenkverbindung stehen dem Fachmann grundsätzlich verschiedene konstruktive Möglichkeiten zur Verfügung.

In einer einfachen Ausführungsform kann eine solche Konstruktion hierfür beispielsweise buchsenförmige Isolationsteile verwenden.

Konstruktiv günstig kann eine Ausführung sein, bei der die Gelenkverbindung in Form eines Stangen-Scharniers ausgebildet ist.

Das Stangen-Scharnier kann aus folgenden Bauteilen zusammengesetzt sein:
- ein erstes Scharnierteil, welches erste Ansätze aufweist, die am Bremsbelaghalter an einer vom Bremsbelag abgewandten Seite angeformt sind;
- ein zweites Scharnierteil, welches zweite Ansätze aufweist, die endseitig am Bremshebel ausgebildet sind;
- wobei jeder erste und zweite Ansatz jeweils eine Bohrung aufweist, die in einem zusammengebauten Zustand zueinander fluchtend angeordnet sind, wobei in Bohrungen der ersten und/oder zweiten Ansätze jeweils eine Buchse befestigt ist, welche eine Lagerbuchse für eine hindurch geführte Scharnierstange bilden.

Um bei einem Schienenfahrzeug die Isolationswirkung möglichst über einen langen Betriebszeitraum aufrechtzuerhalten, ist es günstig, wenn die einzelnen Teile des Scharniers zueinander beabstandet angeordnet sind. Auf einfache Weise kann dies dadurch erreicht werden, indem jeweils an einem stirnseitigen Ende einer jeden Buchse ein Bund ausgebildet ist, der als Abstandshalter zwischen den Scharnierteil wirkt.

Günstig ist hierbei eine Anordnung bei der benachbart zueinander liegende Buchsen jeweils mit ihrem Bund gegenüber stehen. Dadurch wird einer Überbrückung der Isolation durch Abrieb der Scheibenbremse entgegengewirkt. Die elektrische Isolation zwischen Bremshebel und Bremsbelaghalter bleibt auch nach einer langen Betriebsdauer erhalten. Von besonderem Vorteil ist dies insbesondere bei Hochgeschwindigkeitszügen, bei denen der Abrieb elektrisch leitend sein kann.

Die Befestigung einer Buchse in einem solchen Ansatz kann auf einfache Weise durch einen Presssitz erfolgen.

Als Werkstoff für eine Buchse oder eine Isolationsscheibe bieten sich Polymerwerkstoffe und/oder Keramikwerkstoffe an.

Günstig für die Herstellung ist insbesondere ein temperaturbeständiger Kunststoff. Ein solcher Kunststoff kann beispielsweise ein Polyimid oder Polytetrafluorethylen sein. Solche Werkstoffe sind unter dem Handelsnamen Kapton® und Teflon® von der Herstellerfirma Dupont bekannt. Sie sind in der Lage Temperaturen von 280°C beziehungsweise 350°C standzuhalten.

Eine bevorzugte Ausführungsform der Erfindung, bei der der Bremsbelaghalter über eine zweite Gelenkverbindung mittels einer Hängelaschen-Konstruktion am Drehgestell des Schienenfahrzeugs aufgehängt ist, ist dadurch gekennzeichnet, dass auch diese zweite Gelenkverbindung elektrisch isolierender ausgebildet ist. Dadurch wird erreicht, dass auch bei dieser Hängelaschen-Konstruktion, der Strompfad zwischen Schiene und Wagenkasten unterbrochen ist. Eine solche Hängelaschen-Bremszange, hat den Vorteil, dass die Bremsekraft fast ausschließlich über die Hängelaschen in den Rahmen des Drehgestells übertragen wird. Dadurch ist die Beanspruchung der Bremshebel geringer. Erfindungsgemäß ist auch bei dieser Konstruktion der Bremsbelaghalter vom Drehgestell elektrisch getrennt. Folglich ist der Strompfad für die Einspeisung von Rückströmen auch hier unterbrochen.

Eine Hinsichtlich der Herstellung günstige Ausführung einer Hängelaschen-Bremszange kann so aussehen, dass für die gelenkige Verbindung zwischen Bremsbelaghalter und Hängelaschen-Konstruktion wieder Isolations-Buchsen beziehungsweise Isolations-Scheiben verwendet werden.

Unabhängig davon, ob die Scheibenbremse der Bauart nach als Kompakt-Bremszange oder als Hängelaschen-Bremszange ausgebildet ist, ist ein wesentlicher Vorteil der Erfindung darin zu sehen, dass ein Bremsbelag und/oder ein Bremsbelaghalter einfach gewechselt werden kann, ohne dass die gesamte Scheibenbremse einer neuen sicherheitstechnische Abnahme zugeführt werden muss. Eine solche behördliche Zulassung ist stets aufwändig. Ein weiterer wesentlicher Vorteil besteht darin, dass eine bereits in Betrieb befindliche Scheibenbremse auf einfache Weise umgerüstet werden kann.

### Kurzbeschreibung der Zeichnungen

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung zu entnehmen sind.

Es zeigen:
- Figur 1: ein erstes Ausführungsbeispiel der Erfindung, wobei die Scheibenbremse als Kompaktzange ausgebildet ist und wobei eine elektrische Isolation zwischen den als Scharnier ausgebildeten Gelenkteilen, die den Bremsbelaghalter mit dem Bremshebel verbinden, ausgebildet ist;
- Figur 2: einen Bremsbelaghalter einzeln dargestellt mit erfindungsgemäßer Anordnung von Isolationsbuchsen in einer Draufsicht;
- Figur 3: den Bremsbelaghalter gemäß der Figur 2 in einer Seitenansicht in einer teilweise geschnittenen Darstellung;
- Figur 4: eine Detaildarstellung der Gelenksverbindung zwischen Bremsbelaghalter und Bremshebel in einer geschnittenen Darstellung;
- Figur 5: eine weitere Ausführungsform der Erfindung, wobei die Scheibenbremse als Hängelaschen-Bremszange ausgebildet ist und wobei der Bremsbelaghalter mittels einer H-förmigen Hänge-Konstruktion mit dem Drehgestell verbunden ist;
- Figur 6: eine weitere Variante einer Hängelaschen-Bremszange, wobei der Bremsbelaghalter mittels einer I-förmigen Hänge-Konstruktion mit dem Drehgestell verbunden ist;
- Figur 7: eine weitere Variante der Hängelaschen-Bremszange, wobei der Bremsbelaghalter mittels einer Y-förmigen Hänge-Konstruktion mit dem Drehgestell verbunden ist.

### Ausführung der Erfindung

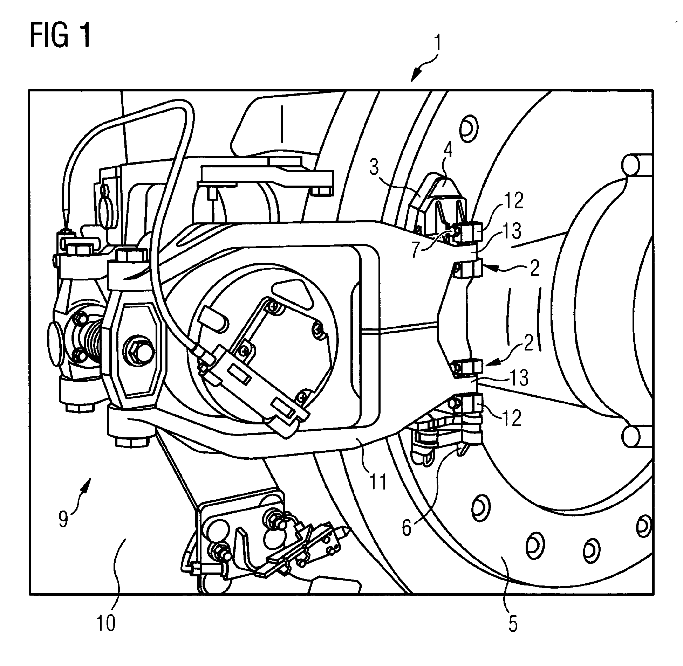

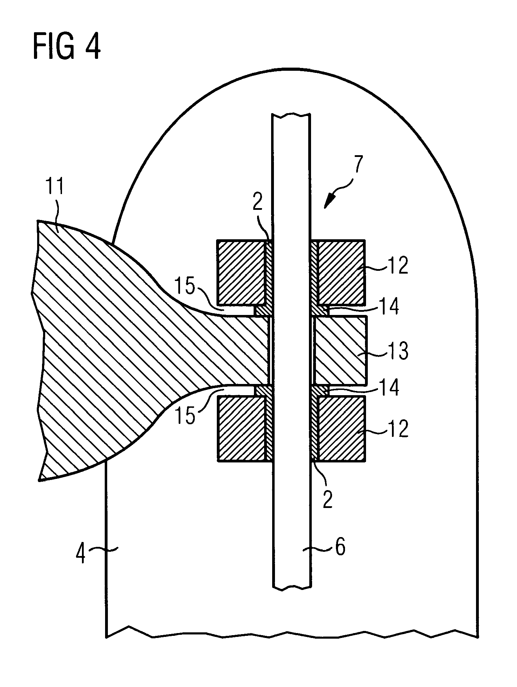

Die Figur 1 zeigt in einer perspektivischen Ansicht eine erfindungsgemäße Scheibenbremse 1 für ein Schienenfahrzeug. Eine Bremszange 9 wird mittels Schrauben am Rahmen des Fahrwerks befestigt. Die Bremszange 9 weist eine Zuspanneinrichtung 10 auf, die im Falle der Betätigung der Scheibenbremse 1 mittels Bremshebel 11 auf einen Bremsbelaghalter 4 wirkt und dadurch einen Bremsbelag 3 gegen die Bremsscheibe 5 drückt. Die Verbindung zwischen dem Bremshebel 11 und dem Bremsbelaghalter 4 ist durch eine Gelenkverbindung 7 hergestellt. Diese Gelenkverbindung 7 ist nach Art eines Stangen-Scharniers ausgebildet. Wie am besten unten aus der Beschreibung zu Figur 4 zu entnehmen ist, besteht das Stangen-Scharnier 7 im Wesentlichen aus einer Scharnierstange 6, die durch Bohrungen in gabelförmigen Ansätzen 12 beziehungsweise 13, hindurchgeführt und gelagert ist. Die Ansätze 12 sind dabei am Bremsbelaghalter 4 angeformt, die Ansätze 13 am Bremshebel 11 ausgebildet.

Im dargestellten Ausführungsbeispiel bildet jeder der Ansätze 12 jeweils einen Lagerbock für die Buchse 2. Die Buchsen 2 sind aus einem Kunststoff hergestellt. Diese Isolation zwischen Bremshebel 11 und Bremsbelaghalter 4 ist vergleichsweise einfach, da die Masse von Bremsbelag 3 und Bremsbelaghalter 4 (ca. 5 kg) verglichen mit der Masse der Bremszange 9 (ca. 150 kg) viel geringer ist.

Die Befestigung der Buchsen 2 in einer Bohrung eines Ansatzes 12 erfolgt durch Presssitz. (Es ist aber auch möglich, dass die Isolierbuchsen 2 in den Bohrungen der Ansätze 13 eingepresst sind).

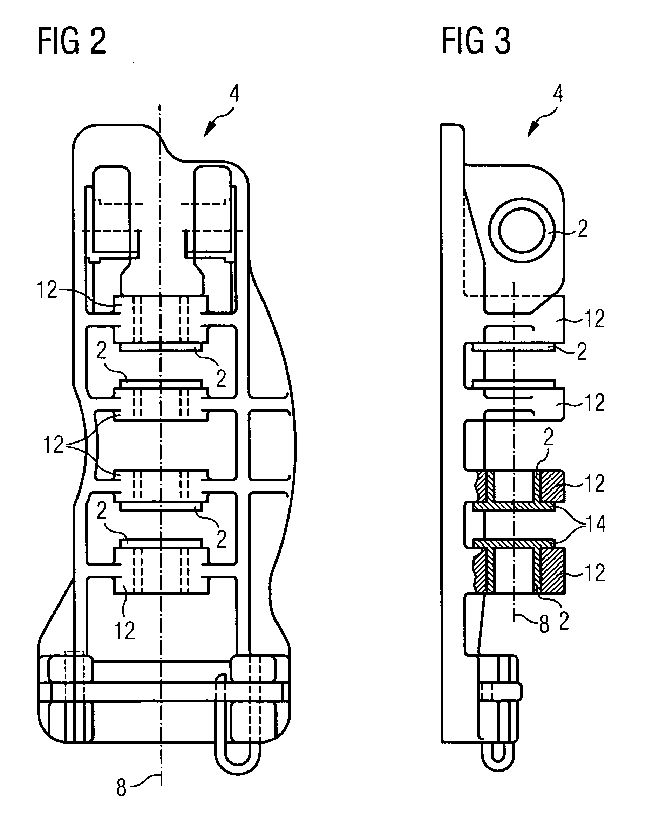

Die Figur 2 zeigt den Bremsbelaghalter 4 in einer Einzeldarstellung in einer Draufsicht; die Figur 3 den Bremsbelaghalter 4 in einer Seitenansicht. Gemäß der Erfindung ist zwischen der Scharnierstange 6 (siehe Figur 4) und dem Bremsbelaghalter 4 eine Isolation in Form von Buchsen 2 ausgebildet. Jede Buchse 2 weist einen Bund 14 auf (Figur 3). Die Buchsen 2 sind jeweils durch einen Presssitz in einer Bohrung im Ansatz 12 gehalten. Die Bohrungen sind längs der Achse 8 fluchtend angeordnet. Jeder Ansatz 12 bildet einen Lagerbock für eine Buchse 2. Die Anordnung ist so gewählt, dass in benachbart zueinander liegenden Ansätzen 12 die jeweiligen Buchsen 2 sich mit ihrem Bund 14 jeweils gegenüberstehen.

Die Figur 4 zeigt in einer Schnittzeichnung in einer herausgerissenen Darstellung die Anlenkung zwischen dem Bremshebel 11 und dem Bremsbelaghalter 4. Das Gelenk 7 besteht wie bereits oben gesagt im Wesentlichen aus der Stange 6, die in isolierenden Buchsen 2 in den Ansätzen 12 des Bremsbelaghalters 4 gelagert ist. Zwischen benachbarten Ansätzen 12 greift jeweils ein Ansatz 13 des Bremshebels 11 ein. Zwischen dem Ansatz 13 und den gabelförmigen Ansätzen 12 ist axial jeweils ein Spalt 15 ausgebildet, dessen Breite jeweils durch den Bund 14 einer Buchse 2 vorgegeben wird. Dadurch wird sichergestellt, dass auch nach einer langen Betriebsdauer Ablagerungen des Abriebs der Bremsbeläge nicht zur Überbrückung der elektrischen Isolation im Spalt 15 führen.

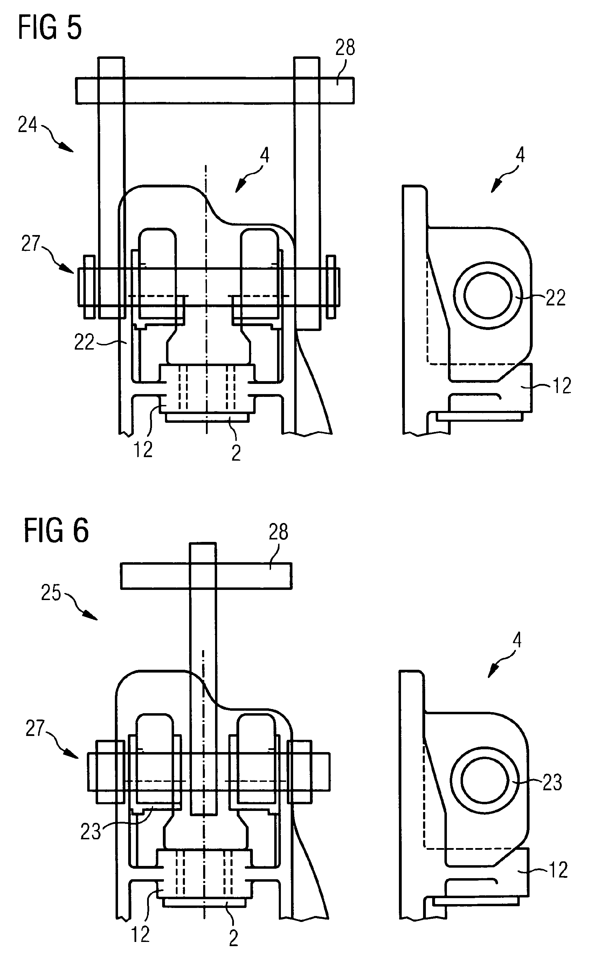

Die Figuren 5, 6, 7 zeigen jeweils Variante der Erfindung, in denen der Bremsbelaghalter 4 zusätzlich mittels einer Hängelaschen-Konstruktion 24, 25, 26 mit einem Drehgestell 28 verbunden ist. Bei einer Scheibenbremse dieser Bauart wird die Bremsekraft nahezu vollständig über die Hängelaschen-Konstruktion 24, 25, 26 und die Gelenkverbindung 27 in den Rahmen des Drehgestells 28 geleitet. Die Befestigung der Bremszange muss im Wesentlichen nur das Eigengewicht und Restmomente der Bremsekraft aufnehmen.

In der Ausführungsform der Figur 5 liegenden die Hängelaschen außen am Bremsbelaghalter an, so dass die elektrische Isolation auf einfache Weise wieder durch Buchsen 22 mit Bund hergestellt sein kann.

In der Ausführung gemäß Figur 6 ist aufgrund der Schrauben am äußeren Ende des horizontal liegenden Bolzens der Gelenkverbindung 27 außen jeweils eine Isolationsscheibe 23 erforderlich.

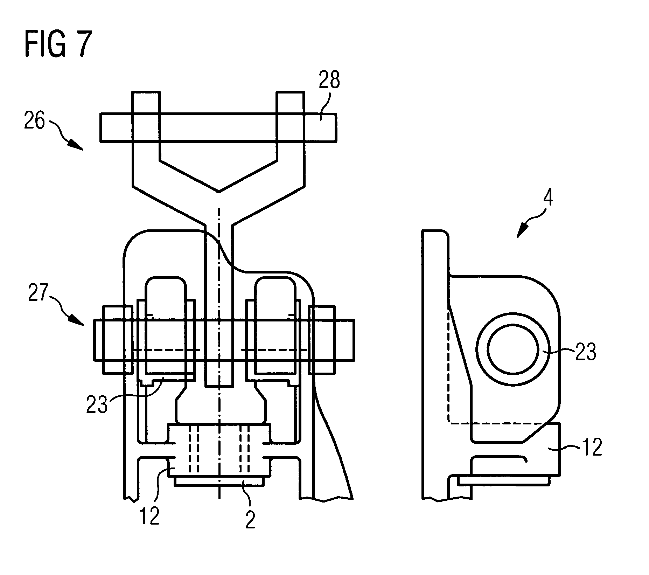

Auch bei der in Figur 7 dargestellten Y-förmigen Hängelaschen-Konstruktion 26 ist außen liegend eine Isolationsscheibe 23 vorgesehen.

Selbstverständlich kann die Isolationswirkung zwischen dem Bremsbelaghalter 4 und der jeweiligen Hängelaschen-Konstruktion 24, 25,26 auch durch Isolations-Hülsen und Isolations-Scheiben hergestellt werden.

Durch die erfindungsgemäße Scheibenbremse lässt sich sowohl für die Bauart einer Kompaktzange als auch für die Bauart einer Hängelaschenzange die Einspeisung von Rückströmen wirkungsvoll unterbinden, so sich "vagabundierende Ströme" sich weniger stark ausbreiten können.

Sowohl bei einer Ausführung als Kompaktzange als auch bei einer Hängelaschenzangen kann die elektrische Isolation des Bremsbelaghalters einfach und kostengünstig realisiert werden.

Ein weiterer großer Vorteil der Erfindung ist darin zu sehen, dass in Betrieb befindliche Scheibenbremsen einfach umgerüstet werden können. Eine aufwändige sicherheitstechnische Abnahme ist nicht erforderlich, da bereits zugelassene Bremsbeläge verwendet werden.

Von weiterem Vorteil ist, dass auch bei starkem Abrieb des Bremsbelags die Isolationswirkung erhalten bleibt; dies auch dann, wenn der Bremsbelag unter das zulässige Verschleißmaß abgenutzt wird.

### Zusammenstellung der verwendeten Bezugszeichen

- 1: Scheibenbremse
- 2: Buchse, Isolationsstück
- 3: Bremsbelag
- 4: Bremsbelaghalter
- 5: Bremsscheibe
- 6: Scharnierstange, Bolzen
- 7: Gelenkverbindung
- 8: Achse
- 9: Bremszange
- 10: Zuspanneinrichtung
- 11: Bremshebel
- 12: Ansatz an 4
- 13: Ansatz an 11
- 14: Bund
- 15: Spalt

- 22: Buchse für Hängelaschen-Konstruktion
- 23: Isolationsscheibe
- 24: H-förmige Hänge-Konstruktion
- 25: I-förmige Hänge-Konstruktion
- 26: Y-förmige Hänge-Konstruktion
- 27: zweite Gelenkverbindung
- 28: Drehgestell

## Patentansprüche

1. Scheibenbremse für ein Schienenfahrzeug, umfassend:
- eine Bremsscheibe (5),
- eine die Bremsscheibe (5) umgreifende Bremszange (9), welche im Betätigungsfall mittels eines Bremshebels (11) einen auf einem Bremsbelaghalter (4) angeordneten Bremsbelag (3) gegen die Bremsscheibe (5) drückt, wobei der Bremshebel (11) und der Bremsbelaghalter (4) mittels einer Gelenkverbindung (7) verbunden sind,
**dadurch gekennzeichnet,**
- **dass** der Bremshebel (11) und der Bremsbelaghalter (4) voneinander elektrisch isoliert ausgeführt sind.

2. Scheibenbremse nach Anspruch 1, **dadurch gekennzeichnet, dass** die Gelenkverbindung (7) zumindest ein Isolationsteil aufweist, welches den Bremshebel (11) und den Bremsbelaghalter (4) elektrisch trennt.

3. Scheibenbremse nach Anspruch 2, **dadurch gekennzeichnet, dass** das zumindest eine Isolationsteil als Buchse (2) ausgebildet ist.

4. Scheibenbremse nach Anspruch 3, **dadurch gekennzeichnet, dass** die Gelenkverbindung (7) als Stangen-Scharnier ausgebildet ist.

5. Scheibenbremse nach Anspruch 4, **dadurch gekennzeichnet dass** das Stangen-Scharnier folgendes umfasst:
- ein erstes Scharnierteil, welches erste Ansätze (12) aufweist, die am Bremsbelaghalter (4) an einer vom Bremsbelag (3) abgewandten Seite angeformt sind;
- ein zweites Scharnierteil, welches zweite Ansätze (13) aufweist, die endseitig am Bremshebel (11) ausgebildet sind;
- wobei jeder erste und zweite Ansatz (12,13) Bohrungen aufweist, die in einem zusammengebauten Zustand zueinander fluchtend angeordnet sind, wobei in Bohrungen der ersten und/oder zweiten Ansätze (12, 13) jeweils eine Buchse (2) befestigt ist, welche eine Lagerbuchse für eine hindurch geführte Scharnierstange (6) bilden.

6. Scheibenbremse nach Anspruch 5, **dadurch gekennzeichnet, dass** jede Buchse (2) an einem stirnseitigen Ende einen Bund (14) aufweist.

7. Scheibenbremse nach Anspruch 6, **dadurch gekennzeichnet, dass** Buchsen (2) in benachbart zueinander liegenden Ansätzen (12) jeweils mit ihrem Bund (14) gegenüberliegend angeordnet sind.

8. Scheibenbremse nach Anspruch 4 oder 6, **dadurch gekennzeichnet, dass** die Befestigung einer Buchse (2) in einer Bohrung eines ersten oder zweiten Ansatzes (12, 13) durch einen Presssitz hergestellt ist.

9. Scheibenbremse nach einem der Ansprüche 2 bis 8, **dadurch gekennzeichnet, dass** jede Buchse (2) aus einem Polymerwerkstoff hergestellt ist.

10. Scheibenbremse nach einem der Ansprüche 2 bis 8, **dadurch gekennzeichnet, dass** jede Buchse (2) aus einem Keramikwerkstoff hergestellt ist.

11. Scheibenbremse nach einem der Ansprüche 9 oder 10, **dadurch gekennzeichnet, dass** jede Buchse (2) eine Wandstärke von größer als 2 mm aufweist.

12. Scheibenbremse nach einem der Ansprüche 3 bis 10, **dadurch gekennzeichnet, dass** der Bund (14) einer Buchse (2) eine axiale Breite aufweist, die größer als 2 mm ist.

13. Scheibenbremse nach Anspruch 9, **dadurch gekennzeichnet, dass** die Buchse (2) aus einem Polyimid oder aus Polytetrafluorethylen hergestellt ist.

14. Scheibenbremse nach einem der vorstehenden Ansprüche, **dadurch gekennzeichnet, dass** der Bremsbelaghalter (4) mittels einer zweiten Gelenkverbindung (27) und einer Hängelaschen-Konstruktion (24, 25, 26) an einem Drehgestell (28) des Schienenfahrzeugs aufgehängt ist, wobei zwischen dem Bremsbelaghalter (4) und der Hängelaschen-Konstruktion (24, 25, 26) eine elektrische Isolation ausgebildet ist.

15. Scheibenbremse nach Anspruch 14, **dadurch gekennzeichnet, dass** die elektrische Isolation zwischen Bremsbelaghalter (4) und Hängelaschen-Konstruktion (24,25,26) durch Buchse (22), die aus einem Isolationswerkstoff gefertigt sind, hergestellt ist.

16. Scheibenbremse nach Anspruch 15, **dadurch gekennzeichnet, dass** die zweite Gelenkverbindung (27) nach Art eines Stangen-Scharniers ausgebildet ist.

## Claims

1. Disk brake for a rail vehicle comprising:
- a disk brake (5),
- a brake calliper (9) encompassing the brake disk (5) which, when actuated by means of a brake lever (11), presses a brake lining (3) arranged on the brake lining retainer (4) against the brake disk (5), wherein the brake lever (11) and the brake lining retainer (4) are connected by means of a hinged connection (7),
**characterised in that**
- the brake lever (11) and the brake lining retainer (4) are designed to be electrically insulated from one another.

2. Disk brake according to claim 1, **characterised in that** the hinged connection (7) has at least one insulation section which electrically separates the brake lever (11) and the brake lining retainer (4).

3. Disk brake according to claim 2, **characterised in that** the at least one insulation section is embodied as a bush (2).

4. Disk brake according to claim 3, **characterised in that** the hinged connection (7) is embodied as a continuous hinge.

5. Disk brake according to claim 4, **characterised in that** the continuous hinge comprises the following:
- a first hinge section having first attachments (12) which are moulded on the brake retainer (4) on a side facing away from the brake lining (3);
- a second hinge section having second attachments (13) which are embodied on the end sides on the brake lever (11);
- wherein each first and second attachment (12, 13) has holes, which in the assembled state are disposed flush with one another, with a bush (2) being fastened into holes of the first and/or second attachments (12, 13), which forms a bearing bush for a hinge pin (6) passed through it.

6. Disk brake according to claim 5, **characterised in that** each bush (2) has a lip (14) at an end face end.

7. Disk brake according to claim 6, **characterised in that** bushes (2) in attachments (12) lying adjacent to one another are each arranged with their lips (14) opposite one another.

8. Disk brake according to claim 4 or 6, **characterised in that** the fastening of a bush (2) in a hole of a first or second attachment (12, 13) is provided by a press fit.

9. Disk brake according to one of claims 2 to 8, **characterised in that** each bush (2) is made of a polymer material.

10. Disk brake according to one of claims 2 to 8, **characterised in that** each bush (2) is made of a ceramic material.

11. Disk brake according to one of claims 9 or 10, **characterised in that** each bush (2) has a wall thickness of greater than 2 mm.

12. Disk brake according to one of claims 3 to 10, **characterised in that** the lip (14) of a bush (2) has an axial width that is greater than 2 mm.

13. Disk brake according to claim 9, **characterised in that** the bush (2) is made of a polyimide or of polytetrafluoroethylene.

14. Disk brake according to one of the preceding claims, **characterised in that** the brake lining retainer (4) is suspended by means of a second hinged connection (27) and a suspension bracket construction (24, 25, 26) on a bogie (28) of the rail vehicle, with electrical insulation being embodied between the brake lining retainer (4) and the suspension bracket construction (24, 25, 26).

15. Disk brake according to claim 14, **characterised in that** the electrical insulation between brake lining retainer (4) and suspension bracket construction (24, 25, 26) is established by bushes (22) made of an insulation material.

16. Disk brake according to claim 15, **characterised in that** the second hinged connection (27) is embodied as a type of continuous hinge.

## Revendications

1. Frein à disque pour un véhicule sur rails, comprenant :
- un disque de frein (5),
- un étrier de frein (9) enveloppant le disque de frein (5),
lequel, lorsqu'il est actionné, pousse au moyen d'un levier de frein (11) une garniture de frein (3) disposée sur un support de garniture de frein (4) contre le disque de frein (5), le levier de frein (11) et le support de garniture de frein (4) étant assemblés au moyen d'une articulation (7),
**caractérisé en ce que**
- le levier de frein (11) et le support de garniture de frein (4) sont isolés électriquement l'un de l'autre.

2. Frein à disque selon la revendication 1, **caractérisé en ce que** l'articulation (7) comprend au moins un élément isolant, lequel sépare électriquement le levier de frein (11) et le support de garniture de frein (4).

3. Frein à disque selon la revendication 2, **caractérisé en ce que** ledit au moins un élément isolant est réalisé sous forme de douille (2).

4. Frein à disque selon la revendication 3, **caractérisé en ce que** l'articulation (7) est réalisée sous forme de charnière piano.

5. Frein à disque selon la revendication 4, **caractérisé en ce que** la charnière piano comprend :
- un premier élément de charnière, lequel comporte des premiers épaulements (12), formés sur le support de garniture de frein (4) sur un côté opposé à la garniture de frein (3) ;
- un deuxième élément de charnière, lequel comporte des deuxièmes épaulements (13), réalisés sur le levier de frein (11) du côté de l'extrémité ;
- chaque premier et deuxième épaulement (12, 13) comportant des alésages disposés en alignement à l'état monté, dans chaque alésage des premiers et/ou deuxièmes épaulements (12, 13) étant fixée une douille (2), qui forme un coussinet pour une barre articulée (6) qui le traverse.

6. Frein à disque selon la revendication 5, **caractérisé en ce que** chaque douille (2) présente à une extrémité frontale une collerette (14).

7. Frein à disque selon la revendication 6, **caractérisé en ce que** les douilles (2) fixées dans des épaulements (12) voisins sont disposées, chacune avec sa collerette (14), en regard l'une de l'autre.

8. Frein à disque selon la revendication 4 ou 6, **caractérisé en ce que** la fixation d'une douille (2) dans un alésage d'un premier ou deuxième épaulement (12, 13) est réalisée par un ajustement serré.

9. Frein à disque selon l'une des revendications 2 à 8, **caractérisé en ce que** chaque douille (2) est réalisée en matériau polymère.

10. Frein à disque selon l'une des revendications 2 à 8, **caractérisé en ce que** chaque douille (2) est réalisée en matériau céramique.

11. Frein à disque selon l'une des revendications 9 ou 10, **caractérisé en ce que** chaque douille (2) présente une épaisseur de paroi supérieure à 2 mm.

12. Frein à disque selon l'une des revendications 3 à 10, **caractérisé en ce que** la collerette (14) d'une douille (2) présente une largeur axiale supérieure à 2 mm.

13. Frein à disque selon la revendication 9, **caractérisé en ce que** la douille (2) est réalisée en polyimide ou en polytétrafluoréthylène.

14. Frein à disque selon l'une des revendications précédentes, **caractérisé en ce que** le support de garniture de frein (4) est suspendu à un bogie (28) du véhicule sur rails au moyen d'une deuxième articulation (27) et d'une construction à éclisses de suspension (24, 25, 26), une isolation électrique étant formée entre le support de garniture de frein (4) et la construction à éclisses de suspension (24, 25, 26).

15. Frein à disque selon la revendication 14, **caractérisé en ce que** l'isolation électrique entre support de garniture de frein (4) et construction à éclisses de suspension (24, 25, 26) est formée par des douilles (22) qui sont réalisées en matériau isolant.

16. Frein à disque selon la revendication 15, **caractérisé en ce que** la deuxième articulation (27) est conçue à la manière d'une charnière piano.
